# EUROPEAN PATENT APPLICATION

(11) **EP 3 492 507 A1**
(43) Date of publication of application: **05.06.2019**
(21) Application number: 17204542.9
(22) Date of filing: 29.11.2017
(51) Int. Cl.: C08G 59/18, C09D 163/00, C09D 5/08

(54) **HARDENER COMPOSITION FOR AQUEOUS EPOXY RESIN BASED COATING COMPOSITIONS, PROCESS FOR THEIR PREPARATION, AND USE THEREOF**

(71) Applicant: ALLNEX AUSTRIA GmbH, 8402 Werndorf (AT)
(72) Inventor: HOBISCH, Gerald, Dr., 8075 HART BEI GRAZ (AT); BERNSTEINER, Iris, 8045 GRAZ (AT); OSSANNA, René, 8111 GRATWEIN-STRASSENGEL (AT)
(74) Representative: Deckers, Hellmuth Alexander

(57) **Abstract**

This invention relates to a hardener composition **H** for an aqueous epoxy resin based two-pack coating formulation wherein the hardener composition **H** comprises reaction products of at least difunctional epoxides **H1,** at least difunctional hydroxypoly-oxyalkylenes **H2,** at least difunctional hydroxyaromatic compounds **H3,** unsaturated fatty acids **H42** having a carboxyl functionality of more one which comprise the so-called dimer fatty acids, secondary amines **H5** having additional carbonylimine-blocked primary amino groups, obtained by reaction of amines **H51** having at least one primary amino group and at least one secondary amino group with carbonyl compounds **H52** which have an aldehyde or ketone carbonyl group, optionally, hydroxy-functional secondary amines **H6** having at least one secondary amino group and at least one hydroxyl group, and further optionally, amines **H7** having at least one primary, and at least one tertiary amino group, wherein the unsaturated fatty acids **H42** are incorporated into the hardener in the form of beta-hydroxy esters. It also relates to a process for the preparation of the hardener **H,** to aqueous two-pack coating compositions with an epoxy resin **E,** and to the use of these coating compositions as first or primer layer to prepare multilayer coatings together with solvent-borne coating compositions for the upper layer.

## Description

### Field of the Invention

This invention relates to a hardener composition for aqueous epoxy resin based coating compositions, to processes for their preparation, and to their use in two-pack aqueous epoxy resin compositions, especially those used for coating of metals and mineral substrates.

### Background of the Invention

Aqueous epoxy resin based coating compositions comprising multifunctional amino hardeners have been known, for example from WO 2012/150312 A1 and WO 2014/072308 A2. These documents relate to two-pack coating compositions made from aqueous dispersions comprising a multi-functional amine having more than one primary amino group per molecule, and an epoxy resin which latter is dispersed in this aqueous dispersion before use. The multifunctional amine is made in a multistep reaction wherein at first, the primary amino groups of an amine having primary and secondary amino groups are blocked by reaction with a ketone to form a ketimine. In a separate step, a chain-extended epoxide resin is made in an advancement reaction from a low molar mass difunctional epoxy compound, an aromatic diol, and a customary catalyst, optionally in the presence of an emulsifier, under removal of water. In the next step, the ketimine and, optionally, a mixture of further amines, are added to the advanced epoxy resin, and addition reaction of the amino groups to the epoxide groups under formation of hydroxyamines proceeds. Finally, water is added under stirring to the product of this step to form a dispersion, and to uncap the blocked primary amino groups, and the ketone blocking agent is distilled off. An at least difunctional epoxy resin is then added to this dispersion to form the two pack coating composition.

While such coating compositions have merit as coating agent particularly for base metals, and provide excellent corrosion protection without liberation of volatile amines during application and curing, the adhesion to topcoats applied onto paint films made from these two-pack coating compositions as described supra has been found to need improvement, particularly when applying such coating compositions for topcoats that are not in the form of aqueous dispersions, but based on solventless paints, or solvent-based paints, particularly such paints as disclosed, i. a. in EP 2 374 836 A1, and WO 2014/166880 A1, where the crosslinking process is a Michael addition reaction between CH-acidic compounds as Michael donors, and electron-deficient olefinically unsaturated compounds as Michael acceptors.

### Object of the Invention

It has therefore been the object of this invention to develop special hardeners for epoxy resin based aqueous coating compositions that can be used in a two-pack formulation, and which lead to coating films having excellent corrosion protection, and improved adhesion to further coatings applied thereon.

### Summary of the Invention

It has been found, in the experiments that have lead to the present invention, that the incorporation of dimer fatty acids in the form of beta-hydroxyesters into hardener compositions **H** for epoxy resins **E** provides epoxy-based coating compositions that exhibit very good adhesion to substrates, particularly metal substrates, and also show improved interlayer adhesion for further coatings which are applied upon this epoxy-based coating layer. The invention therefore relates to hardeners **H** for epoxy resins, which hardeners **H** are reaction products of at least difunctional epoxides **H1**, of at least difunctional hydroxypolyoxyalkylenes **H2,** optionally, of at least difunctional hydroxyaromatic compounds **H3,** of at least difunctional unsaturated fatty acids **H42** having a carboxyl functionality of more than one which are mixtures of the so-called dimer fatty acids and trimer fatty acids, with minor quantities of monofunctional fatty acids also being present in the commercial products, which compounds **H42** are incorporated into the hardeners **H** in the form of beta-hydroxyesters **H4** which are formed by reaction of compounds **H42** with the at least difunctional epoxides **H1**, and of secondary amines **H5** having additional carbonylimine-blocked primary amino groups, obtained by reaction of amines **H51** having at least one primary amino group and at least one secondary amino group with carbonyl compounds **H52** which have an aldehyde or ketone carbonyl group, and optionally, of hydroxy-functional secondary amines **H6** having at least one secondary amino group and at least one hydroxyl group, and further optionally, of amines **H7** having at least one primary, and at least one tertiary amino group. The invention further relates to a process of making the hardeners **H,** to combinations of these hardeners **H** with epoxy resins **E** to formulate water-borne coating compositions, and to the application of these coating compositions to substrates which are further coated with aqueous or non-aqueous coating compositions.

### Detailed Description of the Preferred Embodiments

The at least difunctional epoxides **H1** are preferably glycidyl esters of at least difunctional acid compounds **H11**, or glycidyl ethers of at least difunctional hydroxy compounds **H12.** These said acid compounds **H11** are aromatic or aliphatic carboxylic acids having up to forty carbon atoms, and are preferably selected from the group consisting of terephthalic acid, isophthalic acid, adipic acid, dodecanedioic acid, and cyclohexane dicarboxylic acid, and these said hydroxy compounds **H12** are aromatic or aliphatic compounds having at least two hydroxyl groups and up to forty carbon atoms per molecule, and are preferably selected from the group consisting of aliphatic dihydroxy compounds, preferably hexane diol, dihydroxycyclohexane, and oligomeric or polymeric oxyalkylenediols, and of aromatic dihydroxy compounds, particularly hydroquinone, resorcinol, 4,4'-dihydroxydiphenyl, 4,4'-dihydroxydiphenyl-sulphone, 4,4'-dihydroxybenzophenone, 4,4'-dihydroxydiphenylmethane, 2,2-(4,4'-dihydroxydiphenyl)propane, or from low molar mass or oligomeric novolaks based on phenol, and/or cresol isomers which have more than two, and up to five phenolic hydroxyl groups for the commercially available grades that are used to prepare the so-called epoxy novolak resins.

The at least difunctional hydroxypolyoxyalkylenes **H2** obey the formula HO-(R¹-O)ₙ-H where R¹ is a divalent linear or branched alkylene group of from two to four carbon atoms, n being preferably from five to one hundred, and have at least two hydroxyl groups, and are preferably oxyethylene homopolymers or copolymers having both oxyethylene and oxypropylene units in their molecular structure, where the amount of substance-fraction of oxyethylene units in the copolymer molecules is preferably at least 50 %. Preferred oxyethylene-based polymeric polyols have preferably a number average molar mass of from 1 kg/mol to 20 kg/mol. As the reactivity of aliphatically bound hydroxyl groups during an advancement reaction is too low, moieties derived from the at least difunctional hydroxypolyoxyalkylenes **H2** have to be introduced into the hardeners **H** by first forming an adduct of a diepoxide **H21** which is preferably selected from the same group of compounds as **H1**, but independently thereupon, preferably bisphenol A diglycidylether, and the hydroxypolyoxyalkylenes **H2** in the presence of a strong acid catalyst **K1**, preferably a Lewis acid catalyst, and subjecting this adduct to an advancement reaction with further epoxides and the coreactants as mentioned supra. Preferred Lewis acid catalysts are boron trifluoride BF₃, tetrafluoroboric acid HBF₄, complexes of boron trifluoride with carboxylic acids or aliphatic ethers, and amine complexes of boron trifluoride with aliphatic or aromatic amines, such as ethylamine, N-methylcyclohexylamine, isopropylamine, piperidine, N-methylpiperidine, benzylamine, dimethylbenzylamine, N-methylaniline, N,N-dimethylaniline, or aniline, or mixtures of two or more of these amines.

The at least difunctional hydroxyaromatic compounds **H3** are aromatic dihydroxy or polyhydroxy compounds, preferably selected from the group consisting of hydroquinone, resorcinol, 4,4'-dihydroxydiphenyl, 4,4'-dihydroxydiphenyl ether, 4,4'-dihydroxydiphenyl-sulphone ("bisphenol S"), 4,4'-dihydroxybenzophenone, bisphenol A, bisphenol F, and novolaks of low to medium degree of oligomerisation. Preferred are bisphenol A and bisphenol F.

The at least difunctional unsaturated fatty acids **H42** are mixtures of the so-called dimer fatty acid and trimer fatty acid isomers, with minor quantities of (unreacted) monofunctional acids also being present in the commercial products, which are mostly prepared from tall oil by heat treatment on clay catalysts. Being acids, they directly react with epoxides under advancement reaction conditions, under formation of beta-hydroxy esters **H4.** The fatty acids **H42** replace partly, or completely, the hydroxyaromatic compounds **H3** in the advancement reaction.

The secondary amines **H5** having additional carbonylimine-blocked primary amino groups are made in a separate reaction from amines **H51** having at least one primary amino group and at least one secondary amino group and carbonyl compounds **H52** which have an aldehyde or ketone carbonyl group. The stoichiometry is selected so that all primary amino are consumed by reaction with the carbonyl blocking compound **H51** to form Schiff bases, or imines having the structure - N = C <, and only the secondary amino groups remain. Preferred amines **H51** are diamino-oligoalkyleneimines and diamino-polyalkyleneimines, preferably selected from the group consisting of diethylenetriamine, triethylenetetramine, tetraethylenepentamine, etc., dipropylenetriamine, tripropylenetetramine, tetrapropylenepentamine, etc., dibutylenetriamine, tributylenetetramine, tetrabutylenepentamine, etc., and dihexylenetriamine, tri-hexylenetetramine, tetrahexylenepentamine, etc. These have all two primary amino groups, and a growing number of secondary amino groups. Monosecondary amines function as chain stopper, having an amine functionality of one; disecondary amines lead to linear chains, and amine with a larger number of secondary amino groups should only be used in limited amounts as they give rise to branching and crosslinking during the reaction.

The secondary hydroxyamines **H6** have one secondary amino group, and at least one hydroxyl group, and are preferably linear, branched or cyclic aliphatic amines, preferably selected from the group consisting of diethanolamine, dipropanolamine, diisopropanolamine, dibutanolamine, N-methylethanolamine, N-ethylethanolamine, and 4-hydroxypiperidine.

The amines **H7** having at least one primary, and at least one tertiary amino group and are used to introduce basic groups into the reaction product, and are preferably linear, branched or cyclic aliphatic amines, preferably selected from the group consisting of N,N-dimethylaminoethylamine, N,N-diethylaminoethylamine, N,N-dimethylaminopropylamine, and N,N-diethylaminopropylamine.

Monofunctional epoxides **H8** can be used to adjust the amount of free amine groups of the hardener **H.** Preferred are glycidyl ethers of phenols, such as the glycidyl ether of cresol, and glycidyl esters of monofunctional aliphatic carboxylic acids having from five to twenty carbon atoms, particularly preferred are glycidyl esters of branched aliphatic carboxylic acids, such as the glycidyl esters of neopentanoic acid, and neodecanoic acid.

The process for the preparation of the hardener **H** comprises the following steps:
(a) preparation of a hydrophilically modified epoxy resin by reacting an at least difunctional hydroxypolyoxyalkylene **H2** and an at least difunctional epoxide **H1** in the presence of an acidic catalyst **K1**, under heating up to 200 °C, preferably from 50 °C to 150 °C, particularly preferred from 70 °C to 110 °C,
(b) preparing, in a separate reaction, a carbonylimine **H5** from an aliphatic amine **H51** having at least one primary amino group, and at least one secondary amino group in its molecule, and a blocking agent **H52** for primary amino groups, which blocking agent has preferably carbonyl groups of a ketone or of an aldehyde, to form a ketimine or an aldimine **H5,**
(c) adding to the product of step (a), the at least difunctional acids **H42,** and a catalyst (preferably triphenyl phosphine), and optionally, the hydroxyaromatic compounds **H3,** where in the reaction of these, a part of the epoxide groups is consumed. Optionally, an inert solvent (preferably an aliphatic etheralcohol) is added, and the product **H5** from step (b) is added and reacted until the secondary amino groups of **H5** have been consumed,
(d) secondary hydroxyamines **H6** are then added in a preferred embodiment, and the reaction is continued until all secondary amino groups of **H6** have been consumed. Then, in a further preferred embodiment, primary-tertiary amines **H7** are added and the reaction is conducted until all epoxide groups have been consumed,
(d') further diepoxides **H1** are optionally added after addition of either or both of **H6** and **H7** if needed to consume all remaining primary or secondary amino groups,
(e) the reaction product of step (d) is then neutralised by addition of an organic or inorganic acid, and water is added to the neutralised mixture to decompose the ketimine groups, under regeneration of primary amino groups, and of the blocking agent which is then distilled off together with the optional etheralcohol solvent. The amount of free amino groups in the resulting dispersion can be adjusted by addition of monofunctional epoxides **H8.**

It has been found, in the investigations upon which the present invention is based that the specific amount of substance *n*(HE) / *m*ₛ of beta-hydroxy ester structures derived from component **H42** in the hardener **H,** based on the mass of solids *m*ₛ in the aqueous hardener dispersion, is preferably from 0.2 mol/kg to 2 mol/kg, particularly preferably, from 0.25 mol/kg to 1.5 mol/kg, and especially preferred, from 0.28 mol/kg to 1.3 mol/kg. When using lower specific amounts of substance, the increase in adhesion between the epoxy-resin based primer layer and the coating applied onto the said primer layer is not manifest, and when using higher specific amounts of substance, adhesion of the said primer layer to the metal substrate is impaired.

In preparing water-borne two-pack coating compositions, an epoxy resin **E** in liquid form, optionally together with reactive diluents, thereby avoiding an additional step of aqueously dispersing the epoxy resin component of the two-pack coating composition, is added to the aqueous dispersion of the hardener **H,** under stirring. It is, however, also possible to add an aqueous dispersion of the epoxy resin **E** to the aqueous dispersion of the hardener **H,** under stirring.

The epoxy resin **E** is any liquid epoxy resin, such as the grades known as type 1 liquid epoxy resins which are based on bisphenol A diglycidylether (BADGE, molar mass 340.4 g/mol, melting temperature 43 °C) having a mass average molar mass of from 350 g/mol to 380 g/mol and are liquid at room temperature (25 °C), liquid mixtures of higher molar mass epoxy resins based on BADGE which themselves are solid at room temperature with reactive diluents which are monofunctional such as alkyl phenol glycidylethers, particularly cresylglycidylether, p-tert-butylphenylglycidylether, and glycidylethers and glycidylesters made from cashew nuts shell liquid, long chain alkyl glycidylethers and glycidylesters, particularly glycidylneodecanoate and C₆- to C₁₈-alkyl glycidylethers whereof 2-ethylhexyl glycidylether and mixtures of glycidylethers of C₈- to C₁₀-alcohols or of C₁₂- to C₁₄-alcohols are mentioned, or difunctional such as butanediol diglycidylether, hexanediol diglycidylether, neopentylglycol diglycidylether, cyclohexanedimethanol diglycidylether, dipropyleneglycol digylcidylether, and polypropyleneglycol diglycidylether, or having higher functionality such as trimethylolpropane trigylcidylether and pentaerythritol tetraglycidylether.

The aqueous dispersion of the epoxy resin **E** can be made by chemically incorporating oxyethylene homopolymers or copolymers into the epoxy resin, or by adding emulsifiers **F.** The emulsifier **F** is preferably a non-ionic emulsifier. Alternatively, a combination of a non-ionic emulsifier **F** with an ionic emulsifier may be used. The emulsifier **F** is preferably a non-ionic emulsifier where the hydrophilic portion comprises polyoxyalkylene moieties having two or three carbon atoms in the alkylene group, or a combination of a nonionic and an anionic emulsifier.

Non-ionic emulsifiers which can be used for this invention are preferably selected from the group consisting of monoesters of glycerol and fatty acids, partial esters of polyhydric alcohols such as sugar alcohols, with fatty acids, where esters are referred to as "partial ester" if at least one, preferably at least two ethoxylated fatty acids, ethoxylated fatty acid amides, ethoxylated fatty alcohols, ethoxylated alkyl phenols, and propoxylated analogues of these as well as mixed ethoxylated and propoxylated analogues of these, are present in the partial ester. It is also possible to react oligomeric or polymeric oxyalkylenediols with at least two carbon atoms in the alkylene group with diacids, thereby converting the hydroxyl groups to acid groups which can the be reacted with epoxide-functional oligomers or polymers to form molecules having hydrophilic portions derived from the polyoxyalkylene diol and hydrophobic portions derived from the epoxide-functional oligomers or polymers. Particularly good emulsifying properties are obtained when using low to intermediate molar mass epoxy resins as epoxide-functional oligomers or polymers.

Anionic emulsifiers which can be used for this invention are preferably selected from the group consisting of fatty acid salts, alkanolsulphates, fatty alcohol isethionates, alkali alkanesulphonates, alkylbenzene sulphonates, sulphosuccinic acid esters, alkanol ethoxylate-sulphates, and alkanol ethoxylate-phosphates. Cationic emulsifiers which can be used for this invention are tetraalkyl ammonium halogenides where at least one of the alkyl groups has from eight to forty carbon atoms, while the others preferably have from one to eight carbon atoms, quaternary carboxymethylated ammonium salts, and long chain alkyl substituted pyridinium salts such as lauryl pyridinium chloride. Preferred are combinations of anionic and non-ionic emulsifiers, and combinations of cationic and non-ionic emulsifiers.

Non-ionic emulsifiers are preferably selected from those comprising polyoxyalkylene moieties having two or three carbon atoms in the alkylene group or combinations thereof. Examples of such emulsifiers are block co-polymers of ethylene oxide and propylene oxide.

Non-ionic emulsifiers **F** are preferably selected from those having a weight average molar mass *M*_{w} of at least 3000 g/mol, more preferably of at least 6000 g/mol, and most preferably of at least 10000 g/mol.

If nonionic emulsifiers are used alone, particularly preferred are non-ionic emulsifiers made by reaction of low molar mass epoxy resins which are preferably derived from bisphenol A or bisphenol F or bisphenol S or their mixtures, preferably having two epoxide groups per molecule, and from one to ten repeating units, and dihydroxy polyoxyalkylenes having two or three carbon atoms in the alkylene group, viz., dihydroxy polyoxyethylene or dihydroxy polyoxypropylene, or dihydroxy-copolymers having both C₂- and C₃-alkylene groups in their polymer chain. This reaction is preferably catalysed by a Lewis acid such as boron trifluoride, or complexes of boron trifluoride with Lewis bases such as with ammonia or trimethylamine. A preferred catalyst is made by reacting bisphenol A diglycidylether with dihydroxy polyoxyethylene where the latter has a number average molar mass of from 1 kg/mol to 20 kg/mol, particularly preferred of from 2 kg/mol to 10 kg/mol. Mixtures of two or more different dihydroxy polyoxyalkylenes and/or mixtures of two or more different low molar mass epoxy resins may also be used.

The use of an aqueously dispersible flexibilised epoxy resin is preferred, particularly in the form of its aqueous dispersion, wherein flexibilisation is preferably made by incorporating aliphatic polyesters or polyethers into the polymer chain of the epoxide resins, such as polyesters of adipic acid and butanediol, or polyethers such as oligo- and poly-ethylene glycol, oligo- and poly-propylene glycol, and oligo- and poly-butylene glycol, as well as co-oligomers or copolymers of these. These aliphatic polyesters or polyethers are preferably incorporated into the epoxy resins by co-reacting with their glycidylester or ethers in an advancement reaction.

Coating compositions or paints based on an epoxy resin component **E** as described supra, and the hardener composition **H** of this invention can be used to form primer coatings on any substrate. The are usually formulated by adding usual additives, particularly anti-foaming agents, levelling agents, wetting agents, biocides, light and UV protection agents such as those based on hindered amines, benzophenones and benzotriazoles, and rheology modifiers such as thickeners. Pigmented coating compositions can be prepared by grinding the pigment together with a wetting agent, and optionally, further additives such as antisettling agents, as well as those additives mentioned supra, and further optionally, fillers and colourants, in the aqueous dispersion of the adduct of this invention, adding further additives such as preservatives, coalescing agents, and the epoxy resin, either in aqueous dispersion, or in liquid form, optionally together with a reactive diluent, and optionally a further amount of the aqueous dispersion of the adduct of this invention, and adjusting the mixture to the desired viscosity by addition of water. The clear-coat paints or pigmented coating compositions can be applied to the substrates e.g. by spraying, rolling, dipping, flooding, or brushing.

Two-pack coating compositions of this invention are useful on mineral substrates such as concrete, stone, and plaster, but can also be used with good success on metal substrates. They provide higher gloss and gloss retention, fast hardness development, good adhesion, and improved mechanical and chemical resistance. The primer coatings formed from the two-pack coating composition comprising the hardener **H** and the epoxy resin **E** are particularly valuable as primer coatings for base metals to minimise or prevent corrosion of these metal substrates.

It has been found in the experiments underlying the present invention that the interlayer adhesion of coating films made not from aqueously dispersed coating compositions, but from solvent-borne compositions or solventless coating compositions to a coating film prepared from the two-pack combination of epoxy resins **E** and the hardener **H** according to the present invention is improved with regard to a similar hardener that does not comprise moieties derived from the dimerised or oligomerised fatty acids **H42** in the form of beta-hydroxyesters in the polymer chain formed by the reaction to prepare hardener **H.**

The topcoat coating compositions **T** which are not aqueously dispersed, and optionally, solvent-borne, comprise combinations of resins and adapted crosslinkers. Most resins presently used in solvent-borne, or solvent-less coating compositions have hydroxyl groups as functional groups, and appropriate crosslinkers are mostly multifunctional isocyanates, with isocyanate groups in blocked or free form, or amino resins, mainly melamine resins. The hydroxyl group-containing polymers or resins are mostly alkyd resins, or acrylic resins which also include acrylic or methacrylic copolymers, styrene being frequently used as one of the comonomers. In EP 3 085 748 A1, a fast-curing anti-corrosive system is disclosed which comprises a primer layer based on at least one epoxy resin, and at least one amine curing agent, and a topcoat layer made from at least one crosslinkable component **T1** having at least two acidic C-H protons in a molecule, referred to as "Michael donor", and at least one component **T2** referred to as "Michael acceptor" having at least two olefinically unsaturated groups in its molecule that are activated by electron-withdrawing groups.

Such coating compositions based on at least one crosslinkable component **T1** having at least two acidic C-H protons in a molecule, and at least one component **T2** having at least two olefinically unsaturated groups can preferably also be used to provide a topcoat on a primer layer made with epoxy resins **E,** and the hardener or curative **H** according to this invention. The Michael addition reaction which provides carbon-carbon bonds between the said components **T1** and **T2** is usually catalysed by a strong base **T3.** Examples of such coating compositions are disclosed in EP 2 374 836 A1. They show the same improvement in interlayer adhesion to the primer layer that has been found in topcoats made from solvent-borne coating compositions.

Useful oligomeric or polymeric Michael donor compounds **T1** for the topcoat coating composition used with the primers of this invention are polyesters, polyamides, polyurethanes or polyacrylates comprising activated methylene or methine groups in alpha-position to electron withdrawing groups such as carbonyl, carboxyl, carboxylate, cyano, nitro, sulfo, or sulfoxide groups. Preferred polymers comprise building blocks derived from malonic acid or acetoacetic acid are copolyesters from neopentylglycol, malonic acid, and 1,2-cyclohexanedicarboxylic acid, or copolymers from acrylic esters having hydroxy functional groups with other comonomers such as methylmethacrylate and styrene, where at least a part of the hydroxyl groups averaging to at least two of the hydroxyl groups in a molecule is esterified with acetoacetic acid.

Useful Michael acceptors **T2** are esters of acrylic acid or homologues thereof with at least difunctional linear or branched aliphatic hydroxy compounds or hydroxyether compounds having from two to twenty carbon atoms, such as diethyleneglycol diacrylate, 1,6-hexanediol diacrylate, dipropyleneglycol diacrylate, tripropyleneglycol diacrylate, trimethylolpropane triacrylate, pentaerythritol triacrylate, ditrimethylolpropane tetraacrylate, and dipentaerythritol penta-/ hexaacrylate mixture.

A preferred basic catalyst **T3** as described in EP 2 374 836 A1, and further in WO 2011/124663 A1, WO 2011/124664 A1, and WO 2011/124665 A1, is a carbonate salt of the formula R-O-CO-O⁻ M⁺, where R is H (forming a hydrogen carbonate), or linear or branched alkyl from one to twenty carbon atoms, or aralkyl from seven to twenty-five carbon atoms, (both forming ester-carbonates), M⁺ is an alkali cation, an earth alkali cation, an organic ammonium cation R'₄N⁺, or an organic phosphonium cation R"₄P⁺, where the groups R' and R" are linear or branched or cyclic alkyl groups having from one to ten carbon atoms, such as methyl, ethyl, isopropyl, n-butyl, 2-ethylhexyl, cyclohexyl, and stearyl, or aralkyl from seven to twenty-five carbon atoms, such as benzyl and phenethyl, and may be different from each other in one cation, such as methyltriethyl ammonium, trihexyl tetradecyl phosphonium, triisobutyl methyl phosphonium, and octadecyl trioctyl phosphonium.

Other basic catalysts that accelerate the reaction between Michael donor compounds **T1** and Michael acceptor compounds **T2** are compounds **T41** which are salts of alkali metal cations or organic ammonium cations or organic phosphonium cations, and anions which are preferably carbanions derived from cyanoacetates such as ethylcyanoacetate (pKₐ = 9.0), 1,3-diketones such as acetylacetone (pKₐ = 8.95), 1,3-cyclohexanedione (pKₐ = 5.3), and 5,5-dimethyl-1,3-cyclohexanedione (pKₐ = 5.23), and nitroalkanes such as nitromethane (pKₐ = 10.2), nitroethane (pKₐ = 8.5), and 2-nitropropane (pKₐ = 9.98). These can preferably be combined with one or more optional components **T42** which have one or more acidic Q-H groups wherein Q is selected from the group consisting of nitrogen, phosphorus, oxygen, sulfur, and carbon, the Q⁻ anion being a Michael addition donor reactable with component **T2,** wherein the pKa(T42) of the Q-H group in component **T42** is more than two lower than the pKₐ(T1) of the first proton of component **T1** and being lower than 10.5, and the ratio n(H, T42) / n(C, T41) of the amount of substance of acidic Q-H groups in component **T42** to the amount of substance of the carbanion in component **T41** is between 0.01 and 50. **T42** is preferably an organic amine compound having at least one >NH group where the pKₐ value (negative decadic logarithm of the ionisation constant Kₐ) for the reaction >N-H = >N⁻ + H⁺ is between 4 and 14. These systems are disclosed in WO 2014/166880 A1. Among the preferred organic nitrogen compounds are succinimide, 1,2,4-triazole, and 1,2,3-benzotriazole.

Further constituents that can be present in topcoat coating composition **T** which crosslinks via the Michael addition are light and UV stabilisers, pigments, dispersing agents, flow modifiers, antifoaming agents, matting agents, solvents, and anti-sagging agents.

### Physicochemical Parameters

In the specification, and also in the examples, the following parameters have been used to describe physicochemical properties of the compounds and substances:
The mass fraction of solids *wₛ* was determined by drying a sample B which comprises a substance which is solid at room temperature (23 °C) and is dissolved in a solvent, or dispersed in an aqueous system, with the sample mass of 1 g at 125 °C for one hour, and stating the ratio *w*ₛ = *m*_{Rd} / *m*_{B} of the mass *m*_{Rd} of the residue Rd after drying, and the mass *m*_{B} of the sample B taken. Strength of a solution is stated as the mass fraction *w*_{B} of solute B in the solution, calculated as the ratio *m*_{B} / *m*ₛ of the mass *m*_{B} of solute B and the mass *mₛ* of solution S.
The specific amount of substance of epoxide groups in a sample was determined in the usual way by titration of the sample with tetraethylammonium bromide and perchloric acid in glacial acetic acid, as described by R. R. Jay, Anal. Chem. 36, (1964), pages 667 and 668, and stated as the ratio *n*(EP) / *m*_{B} of the amount of substance *n*(EP) of epoxide groups present in a sample B, and the mass *m*_{B} of that sample B; its customary SI unit is "mol/kg".
The acid number or acid value is defined, according to DIN EN ISO 3682 (DIN 53 402), as the ratio *m*_{KOH} / *m*_{B} of that mass *m*_{KOH} of potassium hydroxide which is needed to neutralise the sample B under examination, and the mass *m*_{B} of this sample B, or the mass *m*_{B} of the solids in the sample in the case of a solution or dispersion; its customary unit is "mg/g".
The amine number or amine value is defined, according to DIN EN ISO 3771 (DIN 16 945 , item 5.6; DIN 53 176) as the ratio *w*_{Am} = *m*_{KOH} / *m*_{B} of that mass *m*_{KOH} of potassium hydroxide which needs the same amount of acid for neutralisation as the sample B under examination, and the mass *m*_{B} of this sample B, or the mass *m*_{B} of the solids in the sample in the case of a solution or dispersion; its customary unit is "mg/g". The specific amount of substance of aminic hydrogen groups in a dispersion, *n*(NH)/*m*, is calculated from the titration results by dividing the amount of substance of aminic hydrogen atoms, n(NH), (I. e., two from each of the primary amino groups, and one from each of the secondary amino groups) by the mass m of the dispersion.
Dynamic viscosity of the dispersion was measured in a cone-and-plate rheometer at 23 °C and a shear rate of 100 s⁻¹.

The invention is further illustrated by the following examples.

### Example 1 Preparation of a Ketimine K1

1030 g (10.0 mol) of diethylene triamine (DETA) and 3000 g (30 mol) of methylisobutyl ketone (MIBK) were charged into a four-necked flask equipped with a mechanical stirrer, a water separator and a gas inlet and heated to reflux under a slight nitrogen flow. When the desired amount of water had been collected after approximately eight hours (360 g = 20.0 mol of water), the excess of MIBK was removed to yield the pure DETA-MIBK-ketimine.

### Example 2 Preparation of the Emulsifier E1

2546 g (6.7 mol) of bisphenol A diglycidyl ether (BADGE), 450 g (0.3 mol) of polyethylene glycol with an average molar mass of 1500 g/mol, and 941 g of methoxypropanol were charged into a four-necked flask equipped with a mechanical stirrer and heated to 100 °C under stirring. When this temperature was reached, 3 g of a borontrifluoride ethylamine complex (BF₃·C₂H₅-NH₂) were charged into the flask and the mixture was heated to 130 °C and maintained at this temperature for two hours until a specific content of epoxide groups of 3.24 mol/kg was reached. All hydroxyl groups of the polyethylene glycol had been consumed in this reaction.

### Example 3 Preparation of the Epoxy-Amine Adduct A1 (comparative)

The reaction mixture of Example 2 was cooled to 100 °C, and 776 g (3.406 mol) of bisphenol A and 3 g of triphenylphosphine were charged into the reaction flask and subjected to an advancement reaction, wherein the reaction mixture was heated again under stirring to 130 °C, and was kept at this temperature for two hours until the specific content of epoxide groups in the reaction mixture had reached 1.27 mol/kg. Then, further 380 g of methoxypropanol were added, and the reaction mixture was cooled to 80 °C. At this temperature, 1335 g of the ketimine K1 of Example 1 were added, and the mixture was stirred for twenty minutes. The mixture was then heated to 90 °C, 84 g of diethanolamine were added under stirring, and the mixture was held for twenty minutes at 90 ° C. 10.2 g of dimethylamino-propylamine were then added, and the reaction mixture was heated to 100 °C and stirred for two hours. 95 g of BADGE were added to scavenge unreacted free amines, and the mixture was stirred at 100 °C for one further hour. After cooling to room temperature (23 °C), the mass fraction of solids was determined to be 80 %, and the dynamic viscosity measured at 23 °C and a shear rate of 25 s⁻¹ was 5000 mPa·s.

### Example 4 Preparation of the Epoxy-Amine Adducts A2 to A4 (according to the Invention)

Example 2 was repeated to prepare the epoxy-amine adducts A2 to A4, where instead of bisphenol A alone, mixtures of bisphenol A and of a dimeric fatty acid mixture were used in the preparation of adducts A2 and A3, and dimer fatty acids alone were used in the preparation of adduct A4, according to the data in the following table 1. The reaction mixture was then subjected to an advancement reaction by heating again under stirring to 130 °C, and was kept at this temperature for two hours until the specific content of epoxide groups in the reaction mixture had reached indicated in table 1. m(AP) stands for the mass of solids of the advancement product in the reaction solution.

**Table 1 Additions to the Emulsifier of Example 2 in Preparation of the Epoxy-Amine Adducts A2 to A4, and characteristic value (according to the Invention)**

| Epoxy-Amine Adduct | | unit | A2 | A3 | A4 |
|---|---|---|---|---|---|
| mass of bisphenol A | *m*(BPA) | g | 613 | 449 | 0 |
| mass of dimer fatty acid | *m*(DFA) | g | 2754 | 55125 | 1308 |
| specific amount of epoxide groups after the advancement reaction | n(EP) / m(AP) | mol/kg | 124 | 121 | 135 |

Then, for each of A2, A3, and A4, further 380 g of methoxypropanol were added, and the reaction mixture was cooled to 80 °C. At this temperature, 1335 g of the ketimine K1 of Example 1 were added, and the mixture was stirred for twenty minutes. The mixture was then heated to 90 °C, 84 g of diethanolamine were added under stirring, and the mixture was held for twenty minutes at 90 °C. 10.2 g of 3-dimethylamino-1-propylamine were then added, and the reaction mixture was heated to 100 °C and stirred for two hours. 95 g of BADGE were added to scavenge unreacted free amines, and the mixture was stirred at 100 °C for one further hour. After cooling to room temperature (23 °C), the mass fraction of solids *w*ₛₒₗ = *m*ₛₒₗ / *m* in the solution of the epoxy-amine adduct was determined, m being the mass of that solution, as well as the specific amount of substance of beta-hydroxyester groups, *n*(βHE) / *m*ₛₒₗ, based on the mass of solids *m*ₛₒₗ in the epoxy-amine adduct, see table 2.

**Table 2 Characteristic values for the epoxy-amine adducts A2 to A4**

| Epoxy-Amine Adduct | | unit | A2 | A3 | A4 |
|---|---|---|---|---|---|
| mass fraction of solids | *w*(solids) | cg/g = % | 804 | 807 | 815 |
| specific amount of beta-hydroxyester groups in the mass of solids of the epoxy-amine adduct | *n*(βHE) / *m*ₛₒₗ | mol/kg | 314 | 613 | 1150 |

### Example 5 Preparation of Hardener Dispersions D1 to D4

Hardener dispersions were prepared from the epoxy-amine adduct A1, A2, A3, and A4 according to the recipe given in table 3:

**Table 3 Preparation and Characteristics of Hardener Dispersions D1 to D4**

| | | | | | | |
|---|---|---|---|---|---|---|
| | Hardener Dispersion | | D1 | D2 | D3 | D4 |
| | Epoxy-Amine Adduct Ai | | A1 | A2 | A3 | A4 |
| Formulation | Mass of Epoxy-Amine Adduct Ai | *m*(Ai) / g | 6620 | 6732 | 3844 | 7152 |
| | Lactic Acid¹ | *m*(LA) / g | 429 | 429 | 429 | 429 |
| | Water I | *m*(WI) / g | 6700 | 6700 | 6700 | 6700 |
| | Reactive Diluent | *m*(RD) / g | 821 | 821 | 821 | 821 |
| | Water II | *m*(WII) / g | 1500 | 300 | 400 | 500 |
| Data | median of particle size² | nm | 150 | 96 | 128 | 184 |
| | mass fraction of solids³ | *w*ₛₒₗ / % | 350 | 402 | 406 | 398 |
| | specific amount of aminic hydrogen groups⁴ | *n*ₛ (NH) / mol·kg⁻¹ | 88 | 99 | 97 | 89 |
| | dynamic viscosity ⁵ of the dispersion D | η_{D} / mPa·s | 20 | 171 | 145 | 170 |

| | | | | | | |
|---|---|---|---|---|---|---|
| 1: aqueous solution of lactic acid having a mass fraction of lactic acid of 50 % 2: determined by dynamic laser scattering according to ISO 22412 3: see definition of physicochemical properties supra 4: see definition of physicochemical properties supra; the specific amount of substance of aminic hydrogen atoms in a dispersion is calculated as *n*ₛ (NH) = *n*(NH) / *m*_{D} where n(NH) is the amount of substance of aminic hydrogen atoms present in the dispersion, and *m*_{D} is the mass of the dispersion 5: see definition of physicochemical properties supra | | | | | | |

The mass as stated in table 3 of epoxy-amine adducts A1 from example 3 and A2 to A4 of example 4 were separately heated to 95 °C and neutralised each with 429 g of a 50 % strength solution of lactic acid in water followed by the addition of 6700 g of water as the first portion ("waterI"). The solvents methoxypropanol and MIBK which latter was split off in the cleavage of the ketimine were distilled off under reduced pressure of 100 hPa at 60 °C. When the distillation of solvent had ceased, 821 g of cresyl glycidyl ether as reactive diluent ("RD") were added to the dispersion, and the mixture was stirred for two hours. The mass fraction of solids of the dispersion was adjusted by addition of a further portion of water ("water II") to 35 % (dispersion D1) and 40 % (dispersions D2, D3, and D4). The median of the particle size distribution was determined by dynamic light scattering using a "Zetasizer nano" (Malvern Instruments Ltd.). The other characteristics were determined as explained supra. Hardener dispersions D2 to D4 are according to the invention, and D1 is a comparative example.

### Example 6 Preparation of Pigmented Primer Coating Compositions

A pigment paste was prepared according to the following recipe:
88.5 g of deionised water were charged whereto 30 g of a nonionic polymeric wetting and dispersing agent (Additol® VXW 6208/60, Allnex Austria GmbH), and 2.5 g of a mineral oil based, silicon-free defoamer (Additol® VXW 6393, Allnex Austria GmbH) were added and mixed. To this mixture, the following components were added in the sequence stated: 57.5 g of a natural mixture of corpuscular silica and lamellar kaolinite (Silitin® Z 89, Hoffmann Mineral GmbH), 223.5 g of a rutile type titanium dioxide pigment (Kronos® 2190, Kronos International Inc.), 6.0 g of a yellow iron oxide pigmentbased on α-FeO(OH), Pigment Yellow 42 (Bayferrox® 3290, Lanxess Deutschland GmbH), 12.5 g of a black iron oxide pigment based on Fe₃O₄, Pigment black 11 (Bayferrox® 306, Lanxess Deutschland GmbH), and 192 g of a white baryte mineral with low calcium carbonate and silicate content and a brightness R_{γ} of 92 (EWO, Sachtleben Minerals GmbH & Co. KG, distributed by Krahn Chemie). The mixture was homogenised after each addition and then transferred to a bead mill and ground for about thirty minutes. The following further components were then added in the sequence indicated: 2.5 g of the mineral oil based, silicon-free defoamer as supra, 6.5 g of a coalescence agent (2,2,4-trimethylpentane-1,3-diol monoisobutyrate, Texanol®, Eastman Chemical), 5.0 g of a urethane-modified polyether thickener (Additol® VXW 6388, Allnex Austria GmbH), and 2.5 g of a polyether modified polysiloxane substrate wetting agent (Additol® 6503N, Allnex Austria GmbH), this mixture was homogenised to a paste P, and pastes P1 to P4 were then completed by adding the masses of the dispersions D1 to D4 as listed in table 4:

**Table 4 Pigmented Pastes P1 to P4**

| Pigmented Paste | P1 | P2 | P3 | P4 |
|---|---|---|---|---|
| Mass of Paste P | 629 g | 629 g | 629 g | 629 g |

| Dispersion | D1 | D2 | D3 | D4 |
|---|---|---|---|---|
| Mass of Dispersion | 364.8 g | 324.2 g | 330.9 g | 360.7 g |

Shortly before application, 494.5 g each of an aqueous, internally plasticised type 1 epoxide dispersion having a mass fraction of solids of 52 % and a specific amount of substance of epoxide group in the dispersion of 1 mol/kg (Beckopox® EP 387w/52WA, Allnex Germany GmbH) was admixed to the different pigmented pastes to form the primer coating compositions PCC1 to PCC4 which were adjusted to the required viscosity by addition of deionised water, and well mixed before applying.

### Example 7 Adhesion Test on Cold Rolled Steel Sheets

Primer coating compositions PCC1 to PCC4 as prepared in Example 6 were applied to untreated cold rolled steel sheets (Gardobond® OC), and after flush-off at room temperature for ten minutes, the coated sheets were dried for twenty minutes at 80 °C in an oven, and then left for at 23 °C and 50 % of relative humidity for one day, seven days, and fourteen days for pst-curing. The dry film thickness of the primer coating was 65 µm (0.065 mm). These sheets were subjected after the time intervals mentioned to a cross-hatch test according to DIN EN ISO 2409 after post-curing, with removal of loose particles using an adhesive tape, where the following results were obtained:

**Table 5 Cross-Hatch Adhesion Test for Primer Coating onto Cold Rolled Steel Sheets**

| Primer Coating Composition | PCC1 (comparative) | PCC2 | PCC3 | PCC4 |
|---|---|---|---|---|
| after 1 d | GT5 | GT3 | GT1 ... GT2 | GT0 |
| after 7 d | GT5 | GT1 | GT0 | GT0 |
| after 14 d | GT5 | GT0 | GT0 | GT0 |

The GT values were determined in accordance with DIN EN ISO 2409.

As can be seen, after fourteen days of post-cure storage, all inventive primer coating compositions showed good adhesion to the steel substrate, while the comparative example (PCC1, without addition of dimer fatty acid in the advancement step) showed bad adhesion regardless of the post-cure time. A higher amount of dimer fatty acids used in the advancement step accelerates the adhesion of the coating layer to the steel sheet.

### Example 8a Inter-Layer Adhesion Test with a Solvent-Borne Pigmented Top-Coat

A pigmented topcoat based on Michael Addition crosslinking was prepared according to the following recipe:

### 8a - 1 Preparation of malonated polyester MPE1

MPE1 was prepared as follows: Into a reactor provided with a distilling column filled with Raschig rings were brought 382 g of neopentyl glycol (M = 104.15 g/mol; 3.668 mol), 262.8 g of hexahydrophthalic anhydride (M = 154.16 g/mol; 1.705 mol) and 0.2 g of butyl stannoic acid (Bu-Sn(O) OH; Fascat® 4100, PMC Vlissingen B.V.). The mixture was polymerised at 240 °C under nitrogen to an acid value of less than 1 mg/g. The mixture was cooled down to 130 °C and 355 g of diethylmalonate (M = 160.168 g/mol; 2.216 mol) were added. The reaction mixture was heated to 170 °C and ethanol was removed under reduced pressure. The resin was subsequently cooled and diluted with butyl acetate to a mass fraction of solids of 85 %, to yield a material with an OH value of 16 mg/g, GPC Mₙ = 1750 g/mol and a specific amount of substance of activated CH₂ groups of 2.86 mol/kg, and a specific amount of substance of acidic CH groups of 5.71 mol/kg (malonate equivalent weight of 350 g/Eq; active C-H EQW = 175 g/Eq).

### 8a - 2 Preparation of malonated polyester MPE2

MPE2 was prepared as follows: Into a reactor provided with a distilling column filled with Raschig rings were brought 382 g of neopentyl glycol, 262.8 g of hexahydrophthalic anhydride and 0.2 g of butyl stannoic acid. The mixture was polymerised at 240 °C under nitrogen to an acid value of less than 1 mg/g. The mixture was cooled down to 130 °C and 355 g of diethylmalonate were added. The reaction mixture was heated to 170 °C and ethanol was removed under reduced pressure. When the viscosity at 100 °C reached 0.5 Pa·s, the material was cooled down to 140 °C and 11.2 g of solid succinimide were added. This mixture was stirred until all succinimide was dissolved. The resin was further cooled and diluted with butyl acetate to a mass fraction of solids of 85 %.

### 8a - 3 Composition of catalyst C

For the preparation of Catalyst C, 43.7 g of aqueous tetrabutylammoniun hydroxide (aqueous solution with a mass fraction of the base of 55 %), 19.7 g of diethyl carbonate, 31.8 g of n-propanol and 4.8 g of water were mixed.

### 8a - 4 Preparation and application of a pigmented topcoat coating formulation

146.4 g of MPE1, 167.5 g of MPE2, 19.9 g of 1,2,4-triazole (solution in n-propanol with a mass fraction of solids of 15 %), 1.9 g of a substrate wetting and levelling agent for solvent-borne coatings based on a silicone acrylate copolymer (BYK® 3550, solution with a mass fraction of solids of 52 %, dissolved in methoxypropylacetate) and 4.3 g of a sterically hindered amine light stabiliser (mixture of bis-(1,2,2,6,6-pentamethyl-4-piperidyl) sebacate and methyl, (1,2,2,6,6-pentamethyl-4-piperidyl) sebacate, commercially available as Tinuvin® 292 from BASF SE) were mixed with 616.9 g of a previously prepared mill base containing 166.4 g of di-trimethylolpropane tetraacrylate (DiTMPTA), 19.4 g of a wetting and dispersing additive (solution of a polyurethane block copolymer having pigment affinic groups in 2-methoxy-1-methylethylacetate, mass fraction of solids ca. 52 %, commercially available as DISPERBYK® 2150 from BYK Chemie GmbH) and 431.1 g of a surface-treated rutile type titanium dioxide white pigment (commercially available as Kronos® 2310 from Kronos BV). After obtaining a homogeneous mixture, 23.3 g of catalyst C were added and mixed in. Coating formulations were drawn down or spray applied onto the steel sheets of example 7 coated with the WB epoxy primer compositions to obtain a dry layer thickness of from 50 µm to 70 µm onto the steel sheets of Example 7 which were coated with the primer coating compositions PCC1 to PCC4, respectively, and post-cured for seven days at 23 °C and 50 % relative humidity.

Interlayer adhesion was tested according to DIN EN ISO 2409 as described supra, after twenty-four hours, seven days, and fourteen days of rest at room temperature (23 °C) and 50 % of relative humidity. The results are collected in table 6:

**Table 6 Cross-Hatch Adhesion Test for Intercoating Adhesion**

| Primer Coating Composition | PCC1 (comparative) | PCC2 | PCC3 | PCC4 |
|---|---|---|---|---|
| Top Coating Composition | as described supra in Example 8a | | | |
| after 1 d | GT4 | GT0 | GT0 | GT0 |
| after 7 d | GT2 | GT0 | GT0 | GT0 |
| after 14 d | GT1 | GT0 | GT0 | GT0 |

### Example 8b Inter-Layer Adhesion Test with a Solvent-Borne Pigmented Top-Coat

A further pigmented topcoat based on Michael Addition crosslinking was prepared according to Example 17 of WO 2014/166 880 A1. A pigment dispersion was prepared by charging 125.28 g of a rutile titanium dioxide pigment (Kronos International Inc., Kronos® 2310), 3.77 g of a wetting and dispersing additive based on a block copolymer having aminic pigment affinic groups, with an amine value *w*_{Am} of 10 mg/g, dissolved in a mixture of xylene, butylacetate, and methoxypropylacetate in a mass ratio of 3:1:1, to yield a solution having a mass fraction of solids of 45 % (Byk Additives and Instruments, DISPERBYK® 163), 59.62 g of ditrimethylolpropane tetraacrylate (Sartomer subsidiary of Arkema; Sartomer® SR 355), and 100 g of a malonate polyester resin having an acid value of 0.3 mg/g, a hydroxyl value of 20 mg/g, and a mass average molar mass of 3400 g/mol, measured on a THF solution via gel permeation chromatography, using a calibration with polystyrene samples. After milling in a bead mill with glass beads, for thirty minutes, further 8.51 g of ditrimethylolpropane tetraacrylate as above, 0.92 g of a mixture of a solution of (a) a mass fraction of 25 % of a polyester-modified polydimethylsiloxane in a mixture of xylene isomers and ethyl benzene in a mass ratio of about 3:1 (Byk Additives and Instruments, BYK® 310) and (b) a mass fraction of 25 % of a polyester-modified polymethylalkyl siloxane in a mixture of equal masses of methoxypropyl acetate and phenoxyethanol (Byk Additives and Instruments, BYK® 315N), 0.87 g of 1H-1,2,3-benzotriazol, 0.31 g of succinimide, 14.69 g of n-propanol, and 13.50 g of ethanol were added to the pigmented mixture, and homogenised well. Finally, 17.71 g of a solution of an amount of substance of 0.125 mol of the potassium salt of 1H-1,2,3-benzotriazol in 63 g of ethanol as basic catalyst were admixed, and the resulting paint was sprayed onto the steel sheets of Example 7 which were coated with the primer coating compositions PCC1 to PCC4, respectively, after post-curing for seven days at 23 °C and 50 % relative humidity, within five minutes after addition of the basic catalyst solution. The painted slabs were dried for sixty minutes at ambient temperature (25 °C), whereafter the dry film thickness of the top coat was determined to be 55 µm (0.055 mm) and tested for intercoat adhesion according to DIN EN ISO 2409 as described supra, after twenty-four hours, seven days, and fourteen days of rest at room temperature (23 °C) and 50 % of relative humidity. The results are collected in table 7.

**Table 7 Cross-Hatch Adhesion Test for Intercoating Adhesion**

| Primer Coating Composition | PCC1 (comparative) | PCC2 | PCC3 | PCC4 |
|---|---|---|---|---|
| Top Coating Composition | as described supra in Example 8b | | | |
| after 1 d | GT4 | GT0 | GT0 | GT0 |
| after 7 d | GT2 | GT0 | GT0 | GT0 |
| after 14 d | GT1 | GT0 | GT0 | GT0 |

As can be seen, for all of the primer coating compositions according to the invention (PCC2 to PCC4), no lack of adhesion was found in both Examples 8a and 8b. In the comparative example using primer coating composition PCC1, prolonged post-curing (fourteen days) improved the intercoat adhesion, yet there were still loose particles of the coating film at the intersections of the cuts. The total uncovered area after removal of loose particles with adhesive tape accounted for not more than 5 % of the cross-cut area.

## Claims

1. A hardener composition **H** for an aqueous epoxy resin based two-pack coating formulation wherein the hardener composition **H** comprises reaction products of
- at least difunctional epoxides **H1**,
- at least difunctional hydroxypoly-oxyalkylenes **H2,**
- optionally, at least difunctional hydroxyaromatic compounds **H3,**
- unsaturated fatty acids **H42** having a carboxyl functionality of more than one which comprise the so-called dimer fatty acids,
- secondary amines **H5** having additional carbonylimine-blocked primary amino groups, obtained by reaction of amines **H51** having at least one primary amino group and at least one secondary amino group with carbonyl compounds **H52** which have an aldehyde or ketone carbonyl group,
- optionally, hydroxy-functional secondary amines **H6** having at least one secondary amino group and at least one hydroxyl group, and
- optionally, amines **H7** having at least one primary, and at least one tertiary amino group,
wherein the unsaturated fatty acids **H42** are incorporated into the hardener in the form of beta-hydroxy esters.

2. The hardener composition of claim 1 wherein the specific amount of substance of beta-hydroxyester groups derived from unsaturated fatty acids **H42,** based on the mass of solids in the hardener **H,** is from 0.25 mol/kg to 1.5 mol/kg.

3. The hardener composition of any of claims 1 or 2 wherein the at least difunctional epoxides **H1** are glycidyl esters of at least difunctional acid compounds **H11**, or glycidyl ethers of at least difunctional hydroxy compounds **H12,** wherein these said acid compounds **H11** are aromatic or aliphatic carboxylic acids having up to forty carbon atoms and are preferably selected from the group consisting of terephthalic acid, isophthalic acid, adipic acid, dodecanedioic acid, and cyclohexane dicarboxylic acid, and these said hydroxy compounds **H12** are aromatic or aliphatic compounds having at least two hydroxyl groups and up to forty carbon atoms per molecule, and are preferably selected from the group consisting of hexane diol, dihydroxycyclohexane, oligomeric or polymeric oxyalkylenediols, particularly those derived from hydroquinone, resorcinol, 4,4'-dihydroxydiphenyl, 4,4'-dihydroxydiphenylsulfone, 4,4'-dihydroxybenzophenone, 4,4'-dihydroxydiphenylmethane, 2,2-(4,4'-dihydroxydiphenyl)propane, or from low molar mass or oligomeric novolaks based on phenol, and/or cresol isomers.

4. The hardener composition of any of claims 1 or 2 wherein theat least difunctional hydroxypoly-oxyalkylenes **H2** are selected from the group consisting of polyoxyethylene diols having a mass average molar mass of from 1000 g/mol to 10 000 g/mol.

5. The hardener composition of any of claims 1 or 2 wherein the at least difunctional hydroxyaromatic compounds **H3** are selected from the group consisting of bisphenol A, bisphenol F, and mixtures thereof.

6. The hardener composition of any of claims 1 or 2 wherein the unsaturated fatty acids **H42** having a carboxyl functionality of more one are dimer fatty acids derived from tall oil.

7. The hardener composition of any of claims 1 or 2 wherein the secondary amines **H5** having additional carbonylimine-blocked primary amino groups are obtained by reaction of amines **H51** having two primary amino groups and at least one secondary amino group which are selected from the group consisting of diethylenetriamine, triethylene tetramine, tetraethylenepentamine, dipropylenetriamine, tripropylene tetramine, tetrapropylenepentamine, dibutylenetriamine, tributylene tetramine, and tetrabutylenepentamine, with carbonyl compounds **H5** which have a ketone carbonyl group, and which are selected from the group consisting of acetone, methylethyl ketone, diethylketone, methylpropyl ketone, and methylisobutyl ketone.

8. The hardener composition of any of claims 1 or 2 wherein the hydroxy-functional secondary amines **H6** having at least one secondary amino group and at least one hydroxyl group are used in the reaction to form hardener **H,** and are selected from the group consisting of diethanolamine, N-methylethanolamine, dipropanolamine, diisopropanolamine, N-methylpropanolamine, N-methylisopropanolamine, and 4-hydroxypiperidine.

9. The hardener composition of any of claims 1 or 2 wherein the amines **H7** having at least one primary, and at least one tertiary amino group are used in the reaction to form hardener **H,** and are selected from the group consisting of N,N-dimethylaminoethylamine, N,N-diethylaminoethylamine, N,N-dimethylaminopropylamine, and N,N-diethylaminopropylamine.

10. The hardener composition of claim 9 wherein the hydroxy-functional secondary amines **H6** having at least one secondary amino group and at least one hydroxyl group are used in the reaction to form hardener **H,** and are selected from the group consisting of diethanolamine, N-methylethanolamine, dipropanolamine, diisopropanolamine, N-methylpropanolamine, -methylisopropanolamine, and 4-hydroxypiperidine.

11. A process for the preparation of the hardener **H** of claim 1, comprising the steps of:
(a) preparation of a hydrophilically modified epoxy resin by reacting an at least difunctional hydroxypolyoxyalkylene **H2** and an at least difunctional epoxide **H1** in the presence of an acidic catalyst **K1**, under heating up to 200 °C,
(b) preparing, in a separate reaction, an imine from an aliphatic amine **H51** having at least one primary amino group, and at least one secondary amino group in its molecule, and a blocking agent **H52** for primary amino groups, which blocking agent has preferably carbonyl groups of a ketone or of an aldehyde, to form a ketimine or an aldimine **H5,**
(c) adding to the product of step (a), compound **H42,** a catalyst, and optionally, compounds **H3,** in the reaction of which a part of the epoxide groups is consumed, adding the product **H5** from step (b) and reacting until the secondary amino groups of **H5** have been consumed,
(d) optionally, adding secondary hydroxyamines **H6,** and maintaining the reaction until all secondary amino groups of **H6** have been consumed,
(e) optionally, adding primary-tertiary amines **H7,** and conducting the reaction until all epoxide groups have been consumed,
(f) optionally, adding further diepoxides **H1** to consume all remaining amino groups,
(g) neutralising the reaction product of step (d) by addition of an organic or inorganic acid, and adding water to the neutralised mixture to decompose the ketimine groups, under regeneration of primary amino groups, and of the blocking agent which is then distilled off.

12. A process for the preparation of an aqueous two-pack coating composition comprising adding to the hardener **H** of claim 1 an epoxy resin **E** having functional epoxide groups.

13. The process of claim 12 wherein the epoxy resin **E** is a flexibilised aqueously dispersible epoxy resin.

14. A method of use of the aqueous two-pack coating composition prepared by the process of any of claims 12 or 13 in the application of a multi-layer coating comprising coating a substrate with the aqueous two-pack coating composition prepared by the process of any of claims 12 or 13 to form a first coating, and applying a second layer onto the said first coating using a solvent-borne or solventless topcoat coating composition.

15. The method of claim 14 wherein the topcoat coating composition is a system which cures by Michael addition.
